# EUROPEAN PATENT SPECIFICATION

(11) **EP 3 119 727 B1**
(45) Date of publication and mention of the grant of the patent: **20.01.2021**
(21) Application number: 15711089.1
(22) Date of filing: 10.03.2015
(51) Int. Cl.: C03C 3/097, C03C 4/16, C03C 10/00, H02K 3/30, H02K 3/34, H01B 3/00, C03B 37/005, C03B 32/02, C03C 12/00, C09K 5/14, H01B 3/08

(54) **AN INSULATION MATERIAL AND A METHOD TO PRODUCE**
ISOLIERMATERIAL UND HERSTELLUNGSVERFAHREN DAFÜR
MATÉRIAU ISOLANT ET PROCÉDÉ DE PRODUCTION

(30) Priority: 20.03.2014 EP 14160846
(43) Date of publication of application: 25.01.2017
(73) Proprietor: General Electric Technology GmbH, 5400 Baden (CH)
(72) Inventor: HILLMER, Thomas, CH-5034 Suhr (CH); HOWARD, Paul, Stafford Staffordshire ST16 1BB (GB); SZKODA-GIANNAKI, Iwona, Stafford Staffordshire ST17 9ET (GB); BAUMANN, Thomas, CH-5430 Wettingen (CH)
(74) Representative: BRP Renaud & Partner mbB Rechtsanwälte Patentanwälte Steuerberater
(86) International application number: PCT/EP2015/054957
(87) International publication number: WO 2015/140007

(56) References cited:
- WO-A1-2008/087093
- US-A- 5 017 207
- US-A1- 2004 085 177
- US-A1- 2011 177 397
- DONALD I W ET AL: "THE PREPARATION AND PROPERTIES OF SOME LITHIUM ZINC SILICATE GLASS-CERAMICS", JOURNAL OF MATERIALS SCIENCE, KLUWER ACADEMIC PUBLISHERS, DORDRECHT, vol. 24, no. 11, 1 November 1989 (1989-11-01), pages 3892-3903, XP000100840, ISSN: 0022-2461, DOI: 10.1007/BF01168952
- GOSWAMI ET AL: "MAS-NMR study of lithium zinc silicate glasses and glass-ceramics with various ZnO content", JOURNAL OF SOLID STATE CHEMISTRY, ORLANDO, FL, US, vol. 181, no. 2, 4 January 2008 (2008-01-04), pages 269-275, XP022451254, ISSN: 0022-4596, DOI: 10.1016/J.JSSC.2007.11.023

## Description

### TECHNICAL FIELD

The present disclosure relates to an insulation material for a conductor bar of an electric machine, a method to manufacture an insulation material for a conductor bar for an electric machine, and a use of glass-ceramic flakes as an insulation material for a conductor bar of an electric machine.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

In electric machines commonly electrically conductive bars are used for the stator and the rotor. The conductive bars are accommodated in notches usually milled into the stator or rotor body. The conductor bars, sometimes having a drilled arrangement of the leads and then referred to as Roebel bars are insulated for high voltages when used in the technical field of generators. The insulation layers at the conductor bars often are composed of three components of which mica is the main component. Mica has a relatively low thermal conductivity of approximately 0.5 W/mK in the axial (normal-to-plane) direction, thus limiting the heat transfer within the entire insulation composite. The mica also governs the coefficient of thermal expansion (CTE) of the insulation in the in-plane direction, forcing it to a CTE of approximately 10 × 10⁻⁶ K⁻¹, which is substantially lower than the CTE of the copper conductor. Hence, there is a need for an alternative electrical insulation material that has higher thermal conductivity and CTE.

EP2102968A1 describes a conductor bar for the stator of a generator which comprises multiple internally positioned partial conductors which are surrounded externally by an insulation layer comprising impregnated glass/mica bands wound around the partial conductors. To improve the mechanical adhesion between the partial conductors and the insulation layer, at least one intermediate layer is provided between the insulation layer and the partial conductors.

US 2004/085177 A1 describes an electrical conductor winding that comprises a plurality of laminates of electrical insulation. Each laminate of electrical insulation has a slot on one surface. Each laminate of electrical insulation has an electrical conductor arranged in the slot. An electrical connector connects the electrical conductor in one laminate of electrical insulation with the electrical conductor in an adjacent laminate of electrical insulation. The laminates of electrical insulation are arranged such that the surface of one laminate of electrical insulation abuts and is bonded to the surface of an adjacent laminate of electrical insulation. The laminates of electrical insulation comprise a glass-ceramic material. The electrical conductor windings allow active magnetic bearings, electric motors and electric generators to be used at temperatures up to 500°C, for example in gas turbine engines.

US 2011/177397 A1 discloses an all solid state battery having high output performance and a manufacturing method thereof. The all solid state battery of the present invention comprises a negative electrode layer, a positive electrode layer, and a solid electrolyte layer having a lithium ion conductivity. At least one layer of the solid electrolyte, the positive electrode layer, and the negative electrode layer includes a lithium ion conductive crystal and AxByOz (A is one or more selected from the group consisting of Al, Ti, Li, Ge, and Si. B is one or more selected from the group consisting of P, N, and C, wherein 1≦X≦4, 1≦Y≦5, and 1≦Z≦7). The solid electrolyte material to which a preferable sintering additive is added in a predetermined ratio is densified by firing at relatively low temperature in the manufacturing process. The ion conductivity thereof is also high.

An object of the invention is to provide for an alternative insulation material in the field of electric machines.

### SUMMARY

An aspect of the disclosure includes an insulation material for an electric machine comprising a polycrystalline glass-ceramic material as a main component.

Another aspect of the disclosure provides a method to produce an insulation material comprising the step of heat treating a silicate glass to obtain a glass-ceramic material.

A further aspect of the present disclosure is the use of an insulation material for a conductor bar in an electric machine.

Further examples of the invention are described in the accompanying claims.

### BRIEF DESCRIPTION OF THE DRAWINGS

Further characteristics and advantages will be more apparent from the description of a preferred but non-exclusive embodiment of the insulation material and the use thereof, illustrated by way of non-limiting examples in the accompanying drawings and micrographs, in which:
- Fig. 1: is a schematic view of the cross-section of a conductor bar with an insulation material according to an example of the invention;
- Fig. 2: is a microscopic picture in the size of millimetres of glass-ceramic flakes according to an example of the invention;
- Fig. 3: is a higher magnification microscopic picture similar to Fig. 1 in the size of micrometres of glass-ceramic flakes according to an example of the invention.

### DETAILED DESCRIPTION OF EXEMPLARY EMBODIMENTS

With reference to the Figs, these show a schematic cross-section of a conductor bar 1 and glass-ceramic flakes 12.

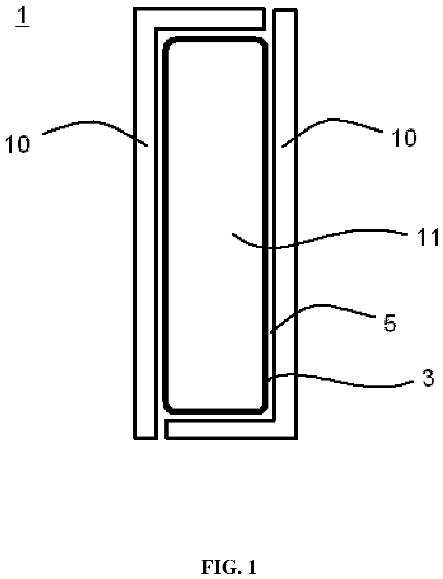

Fig. 1 shows a schematic cross-section of a conductor bar 1 with an insulation material 3 according to an example of the invention. Inside, a conductive bar 11 is arranged which is covered by an insulation layer made of insulation material 3, also referred to as main wall insulation. The common insulation according to the state of the art comprises a mica material impregnated with a resin different to the material 3 used according to the invention. The conductive bar 11 consists of the actual half-winding out of copper-strands where the voltage is induced and the electrical current is flowing during the operation of a generator in which the conductor bar 1 is assembled. Optionally, around the insulation layer 3 a release tape 5 is arranged which serves for unpacking the conductor bar 1 after curing of a resin without damaging the insulation material 3. Further, around the release tape 5 two shapes 10 or accommodating tools are arranged essentially enclosing the three former items. The shapes 10 are for creating defined dimensions and smooth surfaces of the straight sections of the insulated conductive bar 11. The shapes 10 are made of steel and have the form of an 'L' with one long side and a shorter side at the end perpendicular to the long side. The shapes 10 are arranged in a way to create a closed loop around the oval arrangement and are to be removed after manufacture of the conductor bar 1. The expert in the technical field can conceive further applications of the glass-ceramic flakes 12 in the field of electric insulation. As such the glass-ceramic flakes 12 and the method to fabricate are not limited to conductor bars 1 of electric machines as described here.

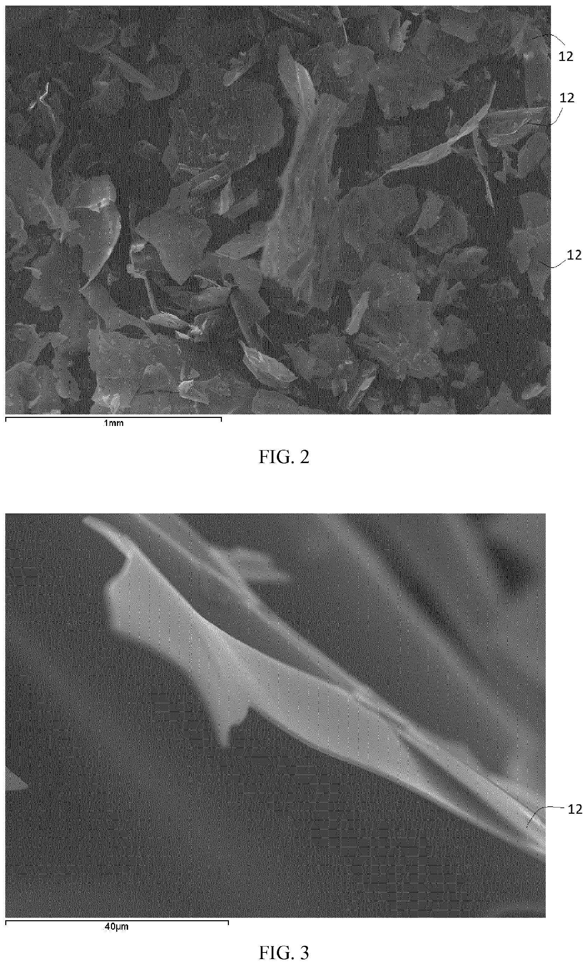

Described herein by way of an example is the production of a glass-ceramic as an alternative to mica material based upon two material production processes. The first of these is the production of silicate glasses of at least one special composition in the form of thin flakes. The term special composition is specified below. Two or more compositions of silicate glasses can be provided as starting or precursor material to obtain the particular glass-ceramic. The structure of glass flakes or flakes of other material is obtained for example by a method disclosed in US5017207A. The size and shape of the glass flakes may be similar to the size of the obtained glass-ceramic flakes 12 as described below. Fig. 2 and Fig. 3 show pictures of glass-ceramic flakes 12 in microscopic scale. Fig. 2 has a scale of millimetre, the glass-ceramic flakes 12 have a length in the range of below one millimetre up to few millimetres, as can be seen in Fig. 3. The glass-ceramic flakes 12 have a low thickness compared to their length, as can be seen in Fig. 2 and especially in Fig. 3. Fig. 3 has a scale of forty micrometres and shows a picture similar to Fig. 2 in an enlarged side view of a single glass-ceramic flake 12. The thickness of the glass-ceramic flakes 12 is in the range of micrometres, as can be seen in Fig. 3, which thickness is referred to here with the term thin. The composition of the glass flakes as precursor to obtain the glass-ceramic is described in the disclosure of this invention. The second process is to transform the silicate glass flakes into a polycrystalline form by a controlled heat treatment. The product of these two processes is a polycrystalline glass-ceramic flake 12. Generally, glass-ceramics contain a finite volume of amorphous material, i.e. residual glass from the glass flakes. This amorphous material surrounds the crystallites and can be understood as an amorphous matrix. As a reference it is cited here 'The preparation of properties of some lithium zinc silicate glasses and glass ceramics, Journal of Materials Science, Nov 1989, vol. 24, issue 11, p. 3892- 3903 et al'. The amorphous material described here is the residual glass in the obtained glass-ceramics. The general concept of glass-ceramic is described and referred to here in 'MAS-NMR study of lithium zinc silicate glasses and glass-ceramics with various ZnO content', Journal of Solid State Chemistry, Vol. 18, issue 2, Feb 208, pages 269- 275. Thus, in this example, glasses of special compositions are produced first as glass flakes and then controllably heat treated to produce polycrystalline glass-ceramic flakes 12. The definition of a special composition of a silicate glass is described in the following.

As a first process two silicate glasses are described by example in the following. The first special composition of a silicate glass is composed of silica, lithium oxide, zinc oxide and phosphorus pentoxide. The latter materials are also referred to as glass precursors. One example of compositional ranges is silica 50-65 wt.%, lithium oxide 8-16 wt.%, zinc oxide 22-32 wt.%, and phosphorous pentoxide 1.5-3.5 wt.%. Another example for compositional ranges is silica 73-85 wt.%, lithium oxide 8-15 wt.%, zinc oxide 2-7 wt.%, phosphorous pentoxide 1-3 wt.%, and potassium oxide 1.5-3.5 wt.%. This silicate glass is melted in air at 1300°C, then processed to produce glass flakes. When heat treated, these silicate glass flakes are transformed into lithium-zinc-silicate-type glass-ceramic flakes 12. The second silicate glass is composed of silica, lithium oxide, zinc oxide, potassium oxide and phosphorus pentoxide. This glass is melted in air at 1400°C, then processed to produce glass flakes. When heat treated, these glass flakes are transformed into lithium disilicate-type glass-ceramic flakes 12.

One example of a glass-ceramic flake 12 fabricated as described here comprises 80% crystallinity and 20% residual glass, another example comprises 40% crystallinity and 60% residual glass, and a further example comprises 44% crystallinity and 56% residual glass. Certain properties of the glass-ceramics have been measured as follows. The average coefficient of thermal expansion of one glass-ceramic as an example of the invention between room temperature and 200°C is measured to be 11.4 × 10⁻⁶ K⁻¹ and the dielectric strength is in the range of 30-42 kV/mm. The average coefficient of thermal expansion of another glass-ceramic between room temperature and 200°C is measured to be 16.5 × 10⁻⁶ K⁻¹. The thermal conductivity is 2.6 W/mK and the dielectric strength is in the range of 20-32 kV/mm.

The resulting glass-ceramic material of an example of the invention that forms the main component of an insulation material 3 of a conductor bar 1 has a complex microstructure consisting mainly of micron-scale crystallites with a proportion of residual amorphous glass. Being predominantly polycrystalline, the glass-ceramic flake 12 has an isotropic thermal conductivity of approximately 3 W/mK. This is six times greater than the thermal conductivity of mica in its axial direction. These properties make the glass-ceramic flakes 12 highly suitable for application as an insulation material, especially for conductor bars 1 to be placed into slots of a stator of an electric machine.

After transformation of the silica glass flakes by heat treatment, the obtained glass-ceramics contains various crystalline phases that have been identified as lithium zinc silicate, lithium metasilicate, lithium disilicate, quartz, crystobalite and tridymite.

In detail, the heat transfer of an insulation of a Roebel bar as a common example for a conductor bar 1 that contains glass-ceramic flakes 12 instead of mica is higher because the thermal conductivity of the glass-ceramic is approximately six times higher than the thermal conductivity of mica.

Further, the heat transfer is improved because glass-ceramic flakes 12 do not exfoliate as mica does. Exfoliation is a process of molecular delamination within the mica material such that the mica flake degrades.

The residual thermo-mechanical stress in the insulation 3 is reduced when glass-ceramic flakes 12 are used instead of mica because its thermal expansion is a closer match to the copper of the Roebel bar or conductor bar 1. Thus, a further benefit is the reduced probability of mechanical failure such as cracks and delamination of the insulation 3 from the Roebel bar or conductor bar 1.

The present disclosure also relates to the use of the polycrystalline glass-ceramic material as the main component of an insulation material 3 for a conductor bar 1 in an electric machine. In this application the commonly used mica material as insulation for a conductor bar 1, for example a Roebel bar, is replaced by the material disclosed.

### REFERENCE NUMBERS

- 1: conductor bar
- 3: insulation material
- 5: release tape
- 10: shapes
- 11: conductive bar
- 12: glass-ceramic flakes

## Claims

1. An insulation material (3) arranged for electrical insulation in a closed loop around a conductor bar (1) for an electric machine comprising polycrystalline glass-ceramic flakes (12) having a low thickness compared to their length made from a heat treated silica glass precursor in the shape of flakes, the thickness of the polycrystalline glass-ceramic flakes (12) being in the range of micrometres, **characterised in that** the insulation material (3) comprises a proportion of glass in the range smaller than 60% and as a main component the polycrystalline glass-ceramic flakes (12), and
**in that** the insulation material (3) comprises as the main component polycrystalline glass-ceramic flakes (12) that contain the crystal phase lithium zinc silicate, lithium metasilicate, lithium disilicate, quartz, cristobalite, or tridymite.

2. The insulation material (3) according to claim 1, **characterised in that** one silica glass precursor, that can be converted to glass-ceramic by controlled heat treatment, contains silica, lithium oxide, zinc oxide, and phosphorous pentoxide.

3. The insulation material (3) according to claim 1, **characterised in that** one silica glass precursor, that can be converted to glass-ceramic by controlled heat treatment, contains silica, lithium oxide, zinc oxide, potassium oxide, and phosphorous pentoxide.

4. The insulation material (3) according to claim 1, **characterised in that** the inorganic component of the insulation material (3) comprises polycrystalline glass-ceramic flakes (12) consisting of 80% of crystallinity surrounded by the amorphous glass as a residual of the glass flakes.

5. The insulation material (3) according to claim 1, **characterised in that** the inorganic component of insulation material (3) comprises polycrystalline glass-ceramic flakes (12) consisting of 40% of crystallinity surrounded by the amorphous glass as a residual of the glass flakes.

6. The insulation material (3) according to claim 1, **characterised in that** the inorganic component of insulation material (3) comprises polycrystalline glass-ceramic flakes (12) consisting of 44% of crystallinity surrounded by the amorphous glass as a residual of the glass flakes.

7. Use of polycrystalline glass-ceramic flakes (12) having a low thickness compared to their length as an insulation material (3) for a conductor bar (1) of an electric machine, the thickness of the polycrystalline glass-ceramic flakes (12) being in the range of micrometres, wherein the insulation material (3) comprises a proportion of glass in the range smaller than 60% and as a main component the polycrystalline glass-ceramic flakes (12), and wherein the insulation material (3) comprises as the main component polycrystalline glass-ceramic flakes (12) that contain the crystal phase lithium zinc silicate, lithium metasilicate, lithium disilicate, quartz, cristobalite, or tridymite.

8. A method to produce a main component of an insulation material (3), comprising the steps of producing a silicate glass precursor of at least one material in the shape of flakes and heat treating the silicate glass precursor in the shape of flakes of at least one material to obtain polycrystalline glass-ceramic flakes (12) having a low thickness compared to their length, the thickness of the polycrystalline glass-ceramic flakes (12) being in the range of micrometres, **characterized in that** the insulation material (3) comprises a proportion of glass in the range smaller than 60% and as a main component the polycrystalline glass-ceramic flakes (12), and arranging the insulation material (3) in a closed loop around a conductor bar (1) of an electric machine, wherein the insulation material (3) comprises as the main component polycrystalline glass-ceramic flakes (12) that contain the crystal phase lithium zinc silicate, lithium metasilicate, lithium disilicate, quartz, cristobalite, or tridymite.

## Patentansprüche

1. Isoliermaterial (3), das zur elektrischen Isolierung in einer geschlossenen Schleife um einen Leiterstab (1) für eine elektrische Maschine angeordnet ist, umfassend polykristalline Glaskeramikflocken (12), die eine geringe Dicke im Vergleich zu ihrer Länge aufweisen, die aus einem wärmebehandelten Silikatglasvorläufer in der Form von Flocken hergestellt sind, wobei die Dicke der polykristallinen Glaskeramikflocken (12) im Mikrometerbereich liegt, **dadurch gekennzeichnet, dass** das Isoliermaterial (3) einen Glasanteil im Bereich kleiner als 60 % und als eine Hauptkomponente die polykristallinen Glaskeramikflocken (12) umfasst, und
dass das Isoliermaterial (3) als die Hauptkomponente polykristalline Glaskeramikflocken (12) umfasst, die die Kristallphase Lithiumzinksilikat, Lithiummetasilikat, Lithiumdisilikat, Quarz, Cristobalit oder Tridymit enthalten.

2. Isoliermaterial (3) nach Anspruch 1, **dadurch gekennzeichnet, dass** ein Silikatglasvorläufer, der durch kontrollierte Wärmebehandlung in Glaskeramik umgewandelt werden kann, Siliciumdioxid, Lithiumoxid, Zinkoxid und Phosphorpentoxid enthält.

3. Isoliermaterial (3) nach Anspruch 1, **dadurch gekennzeichnet, dass** ein Silikatglasvorläufer, der durch kontrollierte Wärmebehandlung in Glaskeramik umgewandelt werden kann, Siliciumdioxid, Lithiumoxid, Zinkoxid, Kaliumoxid und Phosphorpentoxid enthält.

4. Isoliermaterial (3) nach Anspruch 1, **dadurch gekennzeichnet, dass** die anorganische Komponente des Isoliermaterials (3) polykristalline Glaskeramikflocken (12) umfasst, bestehend aus 80 % Kristallinität, die von dem amorphen Glas als ein Rest der Glasflocken umgeben ist.

5. Isoliermaterial (3) nach Anspruch 1, **dadurch gekennzeichnet, dass** die anorganische Komponente des Isoliermaterials (3) polykristalline Glaskeramikflocken (12) umfasst, bestehend aus 40 % Kristallinität, die von dem amorphen Glas als ein Rest der Glasflocken umgeben ist.

6. Isoliermaterial (3) nach Anspruch 1, **dadurch gekennzeichnet, dass** die anorganische Komponente des Isoliermaterials (3) polykristalline Glaskeramikflocken (12) umfasst, bestehend aus 44 % Kristallinität, die von dem amorphen Glas als ein Rest der Glasflocken umgeben ist.

7. Verwendung von polykristallinen Glaskeramikflocken (12), die eine geringe Dicke im Vergleich zu ihrer Länge aufweisen, als ein Isoliermaterial (3) für einen Leiterstab (1) einer elektrischen Maschine, wobei die Dicke der polykristallinen Glaskeramikflocken (12) im Mikrometerbereich liegt, wobei das Isoliermaterial (3) einen Glasanteil im Bereich kleiner als 60 % und als eine Hauptkomponente die polykristallinen Glaskeramikflocken (12) umfasst, und wobei das Isoliermaterial (3) als die Hauptkomponente polykristalline Glaskeramikflocken (12) umfasst, die die Kristallphase Lithiumzinksilikat, Lithiummetasilikat, Lithiumdisilikat, Quarz, Cristobalit oder Tridymit enthalten.

8. Verfahren zum Herstellen einer Hauptkomponente eines Isoliermaterials (3), umfassend die Schritte des Herstellens eines Silikatglasvorläufers mindestens eines Materials in Form von Flocken und des Wärmebehandelns des Silikatglasvorläufers in Form von Flocken mindestens eines Materials, um polykristalline Glaskeramikflocken (12) zu erhalten, die eine geringe Dicke im Vergleich zu ihrer Länge aufweisen, wobei die Dicke der polykristallinen Glaskeramikflocken (12) im Bereich von Mikrometern liegt, **dadurch gekennzeichnet, dass** das Isoliermaterial (3) einen Glasanteil im Bereich kleiner als 60 % und als eine Hauptkomponente die polykristallinen Glaskeramikflocken (12) umfasst, und des Anordnens des Isoliermaterials (3) in einer geschlossenen Schleife um einen Leiterstab (1) einer elektrischen Maschine, wobei das Isoliermaterial (3) als die Hauptkomponente polykristalline Glaskeramikflocken (12) umfasst, die die Kristallphase Lithiumzinksilikat, Lithiummetasilikat, Lithiumdisilikat, Quarz, Cristobalit oder Tridymit enthalten.

## Revendications

1. Matériau d'isolation (3) agencé pour une isolation électrique dans une boucle fermée autour d'une barre conductrice (1) pour une machine électrique comprenant des paillettes de vitrocéramique polycristalline (12) ayant une faible épaisseur par comparaison avec leur longueur, fabriquées à partir d'un précurseur de verre de silice traité thermiquement sous la forme de paillettes, l'épaisseur des paillettes de vitrocéramique polycristalline (12) étant dans la plage de micromètres, **caractérisé en ce que** le matériau d'isolation (3) comprend une proportion de verre dans la plage inférieure à 60 % et en tant que composant principal les paillettes de vitrocéramique polycristalline (12), et
**en ce que** le matériau d'isolation (3) comprend en guise de composant principal des paillettes de vitrocéramique polycristalline (12) qui contiennent la phase cristalline silicate de lithium et de zinc, métasilicate de lithium, disilicate de lithium, quartz, cristobalite ou tridymite.

2. Matériau d'isolation (3) selon la revendication 1, **caractérisé en ce qu'un** précurseur de verre de silice, qui peut être converti en vitrocéramique par un traitement thermique régulé, contient de la silice, de l'oxyde de lithium, de l'oxyde de zinc, et du pentoxyde phosphoreux.

3. Matériau d'isolation (3) selon la revendication 1, **caractérisé en ce qu'**un précurseur de verre de silice, qui peut être converti en vitrocéramique par un traitement thermique régulé, contient de la silice, de l'oxyde de lithium, de l'oxyde de zinc, de l'oxyde de potassium, et du pentoxyde phosphoreux.

4. Matériau d'isolation (3) selon la revendication 1, **caractérisé en ce que** le composant inorganique du matériau d'isolation (3) comprend des paillettes de vitrocéramique polycristalline (12) constituées de 80 % de cristallinité entourées par le verre amorphe en tant que résidu des paillettes de verre.

5. Matériau d'isolation (3) selon la revendication 1, **caractérisé en ce que** le composant inorganique du matériau d'isolation (3) comprend des paillettes de vitrocéramique polycristalline (12) constituées de 40 % de cristallinité entourées par le verre amorphe en tant que résidu des paillettes de verre.

6. Matériau d'isolation (3) selon la revendication 1, **caractérisé en ce que** le composant inorganique du matériau d'isolation (3) comprend des paillettes de vitrocéramique polycristalline (12) constituées de 44 % de cristallinité entourées par le verre amorphe en tant que résidu des paillettes de verre.

7. Utilisation de paillettes de vitrocéramique polycristalline (12) ayant une faible épaisseur par comparaison avec leur longueur en tant que matériau d'isolation (3) pour une barre conductrice (1) d'une machine électrique, l'épaisseur des paillettes de vitrocéramique polycristalline (12) étant dans la plage de micromètres, dans laquelle le matériau d'isolation (3) comprend une proportion de verre dans la plage inférieure à 60 % et en tant que composant principal les paillettes de vitrocéramique polycristalline (12), et dans laquelle le matériau d'isolation (3) comprend en guise de composant principal des paillettes de vitrocéramique polycristalline (12) qui contiennent la phase cristalline silicate de lithium et de zinc, métasilicate de lithium, disilicate de lithium, quartz, cristobalite ou tridymite.

8. Procédé pour produire un composant principal d'un matériau d'isolation (3), comprenant les étapes consistant à produire un précurseur de verre de silicate d'au moins un matériau sous la forme de paillettes et à traiter thermiquement le précurseur de verre de silicate sous la forme de paillettes d'au moins un matériau pour obtenir des paillettes de vitrocéramique polycristalline (12) ayant une faible épaisseur par comparaison avec leur longueur, l'épaisseur des paillettes de vitrocéramique polycristalline (12) étant dans la plage de micromètres, **caractérisé en ce que** le matériau d'isolation (3) comprend une proportion de verre dans la plage inférieure à 60 % et en tant que composant principal les paillettes de vitrocéramique polycristalline (12), et l'agencement du matériau d'isolation (3) dans une boucle fermée autour d'une barre conductrice (1) d'une machine électrique, dans lequel le matériau d'isolation (3) comprend en guise de composant principal des paillettes de vitrocéramique polycristalline (12) qui contiennent la phase cristalline silicate de lithium et de zinc, métasilicate de lithium, disilicate de lithium, quartz, cristobalite ou tridymite.
